# EUROPÄISCHE PATENTSCHRIFT

(11) **EP 3 723 322 B1**
(45) Veröffentlichungstag und Bekanntmachung des Hinweises auf die Patenterteilung: **11.06.2025**
(21) Anmeldenummer: 20167797.8
(22) Anmeldetag: 02.04.2020
(51) Int. Cl.: H04L 9/40

(54) **VERFAHREN ZUR AUTHENTIFIZIERUNG EINES FAHRZEUGS, AUTHENTIFIZIERUNGSEINHEIT, DIENSTEINHEIT UND FAHRZEUGEXTERNE ZENTRALE RECHENEINHEIT**
METHOD FOR AUTHENTICATING A VEHICLE, AUTHENTICATION UNIT, SERVICE UNIT AND VEHICLE-EXTERNAL CENTRAL PROCESSING UNIT
PROCÉDÉ D'AUTHENTIFICATION D'UN VÉHICULE, UNITÉ D'AUTHENTIFICATION, UNITÉ DE SERVICE ET UNITÉ DE CALCUL CENTRALE À L'EXTÉRIEUR DU VÉHICULE

(30) Priorität: 12.04.2019 DE 102019205362
(43) Veröffentlichungstag der Anmeldung: 14.10.2020
(73) Patentinhaber: Continental Automotive Technologies GmbH, 30175 Hannover (DE)
(72) Erfinder: Mack, Rolf, 65824 Schwalbach a. Ts. (DE); Bharamgoudar, Sunil, 65824 Schwalbach a. Ts. (DE)
(74) Vertreter: Continental Corporation

(56) Entgegenhaltungen:
- DE-A1- 102012 010 723
- DE-A1- 102016 218 986
- FR-A1- 2 881 304
- US-A1- 2008 211 624

## Beschreibung

Die Erfindung betrifft ein Verfahren zur Authentifizierung eines Fahrzeugs und eine fahrzeugexterne zentrale Recheneinheit
Während der Benutzung eines Fahrzeugs wird eine Vielzahl an Funktionen und kraftfahrzeugbezogenen Diensten in Anspruch genommen, die eine Authentifizierung des Fahrzeugs oder dessen Fahrers gegenüber Infrastruktureinrichtungen erfordern. Dies kann beispielsweise an Schranken zu zufahrtsbeschränkten oder gebührenpflichtigen Parkplätzen erforderlich sein, die nur bestimmten Fahrzeugen und/oder Fahrern zugänglich sind. Ein anderes Beispiel sind Betriebstankstellen oder Ladestationen, deren Nutzung auf betriebseigene Fahrzeuge beschränkt ist. Nach dem gegenwärtigen Stand der Technik erfolgt die Authentifizierung mittels lokaler Systeme, die in der Regel auf den jeweiligen Anwendungsfall beschränkt sind. Hierbei werden berechtigten Fahrern beispielsweise Magnetkarten oder Funkgeräte bereitgestellt, mit denen er sich authentifizieren oder eine Funktion aktivieren kann.

Durch die zunehmende Verbreitung von Kommunikationssystemen, die eine Kommunikation zwischen Fahrzeugen (sogenannte Car-2-Car-Systeme) oder zwischen Fahrzeugen und Infrastruktureinheiten (sogenannte Car-2-X-Systeme) ermöglichen, ergeben sich neue Möglichkeiten für fahrzeugbezogene Dienste. Die üblichen, auf einzelne Anwendungsfälle beschränkten, lokalen Lösungen sind angesichts der Möglichkeiten dieser Systeme nicht mehr angemessen. Die Vielzahl der lokalen Lösungen könnte durch eine zentrale Lösung ersetzt werden. Ein zentrales System zur Authentifizierung hat sich jedoch noch nicht etabliert. Eine Problematik bei der Authentifizierung eines Fahrzeugs oder eines Fahrers besteht in der Verwendung von personenbezogenen oder sensiblen Daten. Aus Gründen des Datenschutzes ist es erforderlich, bei der Authentifizierung eines Fahrzeugs oder eines Fahrers, persönliche Daten gegenüber dem Dienstanbieter zurückzuhalten. Trotzdem erfordern bestimmte Dienste eine zuverlässige und sichere Authentifizierung des Fahrers und/oder des Fahrzeugs gegenüber dem Dienstanbieter.

Ein Verfahren, das eine Authentifizierung über bestimmte Geheimwerte ermöglicht, ohne die Geheimwerte selbst zu übermitteln, ist in einem Konferenzbeitrag von Dass, Prajnamaya und OM, Hari: "A secure authentication scheme for RFID systems" (Procedia Computer Science, 2016, 78. Jg., S. 100-106) beschrieben.

Ein Verfahren zur Zugriffsverwaltung eines Fahrzeugs offenbart
DE 10 2016 218 986 A1, und es ist daraus ein Kommunikationssystem, das ein Fahrzeug und eine Authentisierungseinrichtung aus mobilem Endgerät und Zentralrechner aufweist, bekannt.

DE 10 2012 010 723 A1 betrifft ein Diagnosesystem mit einer Diagnoseeinrichtung in einem Fahrzeug und einer Diagnoseskript-Bereitstellungseinrichtung.

Ein System und ein Verfahren zur Zugangskontrolle, ein tragbares Terminal sowie eine Schnittstelleneinheit für das System sind aus FR 2 881 304 A1 bekannt.

US 2008/211624 A1 offenbart ein System und ein Verfahren zum Kontrollieren eines physischen Zugriffs mittels eines digitalen Zertifikatsvalidierungsprozesses.

Es ist eine Aufgabe der Erfindung, eine sichere Authentifizierung eines Fahrzeugs oder eines Fahrers gegenüber einer Infrastruktureinheit zu ermöglichen, ohne sensible Daten an die Infrastruktureinheit zu übertragen.

Durch die Erfindung wird ein Verfahren zur Authentifizierung eines Fahrzeugs gegenüber einer Diensteinheit mittels einer fahrzeugexternen zentralen Recheneinheit gemäß Anspruch 1 bereitgestellt. Während des Verfahrens ist eine Authentifizierungseinheit in dem Fahrzeug bereitgestellt. Mit anderen Worten ist die Authentifizierungseinheit als eigenständige Vorrichtung an dem Fahrzeug angeordnet oder ein Bestandteil des Fahrzeugs. Die Authentifizierungseinheit kann beispielsweise einen Mikroprozessor und/oder Mikrocontroller umfassen. In einem ersten Schritt des Verfahrens wird durch die Diensteinheit ein Initialwert generiert und von der Diensteinheit an die Authentifizierungseinheit übertragen. Mit anderen Worten wird durch die Diensteinheit, gegenüber der eine Authentifizierung des Fahrzeugs und/oder des Fahrers erfolgen soll, ein zufälliger oder pseudozufälliger Wert als Initialwert zur Einleitung des Verfahrens erstellt und an die Authentifizierungseinheit übertragen. Die Diensteinheit kann beispielsweise einen Mikroprozessor und/oder Mikrocontroller und eine Funkeinheit umfassen und beispielsweise in einer Schranke angeordnet sein, an der ein Fahrer des Fahrzeugs Einlass erbittet. Die Übertragung kann beispielsweise über eine Funkverbindung zwischen der Diensteinheit und der Authentifizierungseinheit erfolgen.
Durch die Authentifizierungseinheit wird in Abhängigkeit von dem Initialwert ein Anfragebefehl aus einer in der Authentifizierungseinheit gespeicherten Anfragetabelle ausgelesen. Mit anderen Worten ist die Anfragetabelle in der Authentifizierungseinheit gespeichert. Die Anfragetabelle kann den zumindest einen Anfragebefehl als Tabellenelement aufweisen. Um den aus der Anfragetabelle auszulesenden Anfragebefehl zu bestimmen, erfolgt eine Auswahl nach einem vorbestimmten Verfahren, wobei der Initialwert alleine oder in Kombination mit anderen Werten als Eingangsvariable verwendet wird, oder ein aus dem Initialwert berechneter Wert. Das Verfahren kann beispielsweise für den Initialwert einen der Anfragebefehle zugeordneten Indexwert bestimmen. Der Anfragebefehl kann beispielsweise ein Programmcode und/oder Signal zur Abfrage eines vorbestimmten Parameters des Fahrzeugs aus einem Netzwerk des Fahrzeugs sein. Der aus der Anfragetabelle ausgelesene Anfragebefehl wird von der Authentifizierungseinheit an eine Schnittstelle des Fahrzeugs ausgegeben. Mit anderen Worten wird der Anfragebefehl von der Authentifizierungseinheit an die Schnittstelle übertragen. Die Schnittstelle des Fahrzeugs kann beispielsweise ein OBD-Anschluss (On-Board-Diagnose-Anschluss) des Fahrzeugs sein. Der Anfragebefehl kann ein Befehl zur Ausgabe eines vorbestimmten Wertes einer Fahrzeugkomponente des Fahrzeugs sein, welche eine Identifizierung des Fahrzeugs ermöglicht und beispielsweise dem CAN-Standard genügt. In dem Fahrzeug wird der Anfragebefehl durch die Fahrzeugkomponente ausgeführt, wobei diese als Antwort auf den Anfragebefehl einen Ausgabewert ausgibt. Mit anderen Worten wird nach Erhalt des Anfragebefehls durch die Fahrzeugkomponente der Ausgabewert, der dem Anfragebefehl zugeordnet ist, erzeugt. Die Fahrzeugkomponente kann beispielsweise eine Motorsteuereinheit des Fahrzeugs sein. In diesem Fall kann der Anfragebefehl eine Ausgabe eines Identifikationswerts der Motorsteuereinheit als Ausgabewert vorsehen. Der erstellte Ausgabewert wird aus der Schnittstelle durch die Authentifizierungseinheit empfangen. Mit anderen Worten wird der Ausgabewert von der Fahrzeugkomponente über die Schnittstelle an die Authentifizierungseinheit übertragen.

Die Authentifizierungseinheit berechnet mittels einer vorbestimmten Prüfwertfunktion aus dem Ausgabewert einen Fahrzeugprüfwert. Die Prüfwertfunktion kann beispielsweise eine Hashwertfunktion oder eine Pseudozufallswertfunktion (pseudo random number generator, PRNG) sein. Mit anderen Worten wird durch die Authentifizierungseinheit der zugeordnete Fahrzeugprüfwert berechnet, wobei die Berechnung mittels der vorbestimmten Prüfwertfunktion erfolgt. Der Fahrzeugprüfwert kann beispielsweise eine Prüfsignatur, ein Hashwert oder ein Pseudozufallswert sein, der zur Überprüfung des Ausgabewerts verwendet werden kann, aus welchem der Ausgabewert selbst jedoch nicht zurückberechnet werden kann. In einem weiteren Schritt werden der aus dem Ausgabewert generierte Fahrzeugprüfwert und der Initialwert von der Authentifizierungseinheit an eine zentrale Recheneinheit übertragen. Dies kann beispielsweise mittels eines mobilen Funknetzwerkes und/oder Internet erfolgen. Die zentrale Recheneinheit kann beispielsweise ein Zentralrechner oder ein Rechnerverbund sein und sich außerhalb des Fahrzeugs befinden. Die Übertragung kann direkt von der Authentifizierungseinheit an die zentrale Recheneinheit erfolgen oder über die Diensteinheit geleitet werden.

Durch die zentrale Recheneinheit wird in Abhängigkeit von dem empfangenen Initialwert ein Kennwert aus einer in der zentralen Recheneinheit gespeicherten Kennwerttabelle ausgelesen. Der Kennwert ist ein zu erwartender Wert, der bei einem ordnungsgemäßen Ablauf des Verfahrens mit dem aus der Fahrzeugkomponente empfangenen Ausgabewert übereinstimmt. Es kann sich beispielsweise um den bereits genannten eindeutigen Identifikationswert der Motorsteuereinheit handeln. Die Bestimmung des auszulesenden Kennwertes kann nach demselben Verfahren erfolgen wie in der Authentifizierungseinheit. Mittels der vorbestimmten Prüfwertfunktion wird aus dem Kennwert ein weiterer Fahrzeugprüfwert durch die zentrale Recheneinheit berechnet. Der von der Authentifizierungseinheit aus dem Ausgabewert berechnete Fahrzeugprüfwert und der durch die zentrale Recheneinheit aus dem Kennwert generierte weitere Fahrzeugprüfwert werden durch die zentrale Recheneinheit auf eine Übereinstimmung überprüft. Bei einer Übereinstimmung des Fahrzeugprüfwerts mit dem weiteren Fahrzeugprüfwert wird durch die zentrale Recheneinheit ein vorbestimmtes Freigabesignal an die Diensteinheit versandt. Mit anderen Worten erfolgt durch die zentrale Recheneinheit ein Versand eines Freigabesignals an die Diensteinheit. Der Versand kann beispielsweise kabelgebunden oder kabellos erfolgen.

Durch die Erfindung ergibt sich der Vorteil, dass ein Fahrzeug an einer Diensteinheit authentifiziert werden kann, ohne sensible Ausgabewerte an die Diensteinheit selbst zu übertragen. Die Diensteinheit und/oder ein unberechtigter Empfänger, der übermittelte Werte abfängt, können somit nicht an den Ausgabewert gelangen oder diesen aus den abgefangenen Werten rekonstruieren. Es kann somit eine Koppelung des Fahrzeugs mit der zentralen Recheneinheit über die Anfragetabelle mit der zugeordneten Kennwerttabelle ermöglicht werden.

Die Erfindung umfasst optionale Weiterbildungen, durch die sich weitere Vorteile ergeben.

Eine Weiterbildung der Erfindung sieht vor, dass in der Authentifizierungseinheit ein der Authentifizierungseinheit eindeutig zugeordneter Identifikationswert gespeichert ist. Mit anderen Worten ist der Identifikationswert ein Wert, der die Authentifizierungseinheit eindeutig identifiziert. Durch die Authentifizierungseinheit wird mittels der Prüfwertfunktion aus dem Identifikationswert ein Identifikationsprüfwert generiert. Mit anderen Worten wird durch die Authentifizierungseinheit mittels der Prüfwertfunktion der Identifikationsprüfwert berechnet. In dem Verfahren ist es vorgesehen, dass der Identifikationsprüfwert zusammen mit dem Fahrzeugprüfwert an die zentrale Recheneinheit übertragen wird. Mit anderen Worten ist es in dieser Weiterbildung vorgesehen, dass zusätzlich zu dem Fahrzeugprüfwert der Identifikationsprüfwert von der Authentifizierungseinheit an die zentrale Recheneinheit versandt wird. Durch die zentrale Recheneinheit wird der Identifikationsprüfwert mit Einträgen einer in der Recheneinheit gespeicherten Identifikationstabelle auf eine Übereinstimmung geprüft. Mit anderen Worten wird durch die zentrale Recheneinheit überprüft, ob der empfangene Identifikationsprüfwert in der Identifikationstabelle der zentralen Recheneinheit gespeichert ist. Es ist vorgesehen, dass die zentrale Recheneinheit das vorbestimmte Freigabesignal an die Diensteinheit nur aussendet, wenn einer der Einträge der Identifikationstabelle mit dem Identifikationsprüfwert übereinstimmt. Der Versand des Freigabesignals erfordert somit, dass zusätzlich zu der Übereinstimmung des Fahrzeugprüfwerts mit dem weiteren Fahrzeugprüfwert auch der Identifikationsprüfwert in der Identifikationstabelle gespeichert sein muss.

Durch die Weiterbildung ergibt sich der Vorteil, dass das Verfahren eine Überprüfung der Authentifizierungseinheit erfordert und hierdurch die Sicherheit erhöht werden kann.

Eine Weiterbildung der Erfindung sieht vor, dass durch die Authentifizierungseinheit ein zweiter Initialwert generiert wird, und in der Authentifizierungseinheit ein Geheimwert gespeichert ist. In der zentralen Recheneinheit ist ein weiterer Geheimwert gespeichert. Mit anderen Worten ist in den beiden Einheiten ein jeweiliger Geheimwert als sogenanntes geteiltes Geheimnis ("shared secret") gespeichert. Zur erfolgreichen Durchführung des Verfahrens müssen der Geheimwert und der weitere Geheimwert identisch sein. Durch die Authentifizierungseinheit wird mittels der vorbestimmten Prüfwertfunktion ein Sitzungsprüfwert berechnet, der aus dem in der Authentifizierungseinheit gespeicherten Geheimwert, dem von der Diensteinheit generierten Initialwert und dem von der Authentifizierungseinheit generierten weiteren Initialwert generiert wird. Mit anderen Worten wird der Sitzungsprüfwert mittels der Prüfwertfunktion aus dem in der Authentifizierungseinheit gespeicherten Geheimwert, dem von der Diensteinheit generierten Initialwert und dem von der Authentifizierungseinheit generierten weiteren Initialwert generiert. Der Sitzungsprüfwert wird zusammen mit dem Fahrzeugprüfwert von der Authentifizierungseinheit an die zentrale Recheneinheit übertragen. Durch die zentrale Recheneinheit wird mittels der Prüfwertfunktion ein weiterer Sitzungsprüfwert generiert, der aus dem weiteren Geheimwert, dem Initialwert und dem weiteren Initialwert erstellt wird. Mit anderen Worten erfolgt durch die zentrale Recheneinheit mittels der Prüfwertfunktion die Generierung des weiteren Sitzungsprüfwerts aus dem in der zentralen Recheneinheit gespeichertem weiteren Geheimwert, dem Initialwert und dem weiteren Initialwert. Durch die zentrale Recheneinheit werden der weitere Sitzungsprüfwert und der Sitzungsprüfwert auf eine Übereinstimmung geprüft. Es wird somit durch die zentrale Recheneinheit überprüft, ob der von der Authentifizierungseinheit generierte Sitzungsprüfwert und der von der zentralen Recheneinheit generierte weitere Sitzungsprüfwert identisch sind. Es ist vorgesehen, dass die zentrale Recheneinheit das vorbestimmte Freigabesignal an die Diensteinheit nur aussendet, wenn der Sitzungsprüfwert mit dem weiteren Sitzungsprüfwert übereinstimmt. Mit anderen Worten ist es für die Fortführung des Verfahrens erforderlich, dass die beiden Sitzungsprüfwerte identisch sind. Dadurch kann sichergestellt werden, dass in der zentralen Recheneinheit und der Authentifizierungseinheit derselbe Initialwert, derselbe weitere Initialwert und derselbe Geheimwert bereitgestellt sind.

Dadurch ergibt sich der Vorteil, dass ein jeweiliger Authentifizierungsvorgang zwischen der Authentifizierungseinheit und der zentralen Recheneinheit mittels der Sitzungsprüfwerte abgesichert werden kann. Es ist beispielsweise möglich, dass sich die jeweiligen Initialwerte und/oder die jeweiligen weiteren Initialwerte und/oder die jeweiligen Geheimwerte bei verschiedenen Authentifizierungsverfahren voneinander unterscheiden. Dies kann dazu führen, dass ein jeweiliges Authentifizierungsverfahren einen individuellen Sitzungsprüfwert aufweisen kann. Wird der bereits verwendete Sitzungsprüfwert erneut verwendet, kommt es zu einer Abweichung, weil beispielsweise der Geheimwert während eines jeweiligen Authentifizierungsvorgangs aktualisiert werden kann.

Eine Weiterbildung der Erfindung sieht vor, dass durch die zentrale Recheneinheit der weitere Geheimwert als das vorbestimmte Freigabesignal an die Diensteinheit versandt wird. Mit anderen Worten handelt es sich bei dem vorbestimmten Freigabesignal um den in der zentralen Recheneinheit gespeicherten weiteren Geheimwert, der mit dem in der Authentifizierungseinheit gespeicherten Geheimwert übereinstimmt. Durch die Diensteinheit wird mittels der Prüfwertfunktion aus dem Geheimwert und dem Initialwert ein erster Freigabeprüfwert berechnet. Mittels der Prüfwertfunktion wird durch die Diensteinheit aus dem ersten Freigabeprüfwert M ein zweiter Freigabeprüfwert N berechnet. Der erste Freigabeprüfwert M wird von der Diensteinheit an die zentrale Recheneinheit übertragen. Der zweite Freigabeprüfwert N wird von der Diensteinheit an die Authentifizierungseinheit übertragen.
Durch die zentrale Recheneinheit wird mittels der Prüfwertfunktion aus dem weiteren Geheimwert und dem ersten Freigabeprüfwert M ein Aktualisierungswert U berechnet. Der in der zentralen Recheneinheit gespeicherte weitere Geheimwert wird mittels einer vorbestimmten Aktualisierungsfunktion um den Aktualisierungswert U aktualisiert. Mit anderen Worten wird durch die zentrale Steuereinheit eine Aktualisierung des weiteren Geheimwertes durchgeführt, wobei aus dem bereits vorhandenen weiteren Geheimwert und dem Aktualisierungswert U mittels der vorbestimmten Aktualisierungsfunktion ein aktualisierter Geheimwert berechnet wird. Durch diesen aktualisierten Geheimwert wird der ursprünglich in der externen Recheneinheit gespeicherte weitere Geheimwert ersetzt.

Durch die Authentifizierungseinheit wird mittels der Prüfwertfunktion aus dem Geheimwert und dem Initialwert ein weiterer erster Freigabeprüfwert M' berechnet. Mittels der Prüfwertfunktion wird aus dem weiteren ersten Freigabeprüfwert M' ein weiterer zweiter Freigabeprüfwert N' berechnet. Mit anderen Worten werden durch die Authentifizierungseinheit die gleichen Schritte durchgeführt, wie sie in der Diensteinheit erfolgt sind. Nach der Berechnung des weiteren zweiten Freigabeprüfwerts N' wird dieser durch die Authentifizierungseinheit auf eine Übereinstimmung mit dem zweiten Freigabeprüfwert N überprüft. Mit anderen Worten überprüft die Authentifizierungseinheit, ob der durch die Authentifizierungseinheit berechnete weitere zweite Freigabeprüfwert N' mit dem durch die Diensteinheit berechneten und an die Authentifizierungseinheit übertragenen zweiten Freigabeprüfwert N identisch ist. Auf diese Weise wird überprüft, ob der von der zentralen Recheneinheit an die Diensteinheit übertragene weitere Geheimwert und der in der Diensteinheit gespeicherte Initialwert mit den korrespondierenden Werten in der Authentifizierungseinheit übereinstimmen. Liegt eine Übereinstimmung vor, wird durch die Authentifizierungseinheit mittels der Prüfwertfunktion aus dem Geheimwert und dem weiteren zweiten Freigabeprüfwert N' der Aktualisierungswert berechnet. Der in der Authentifizierungseinheit gespeicherte Geheimwert wird wie in der zentralen Recheneinheit mittels der vorbestimmten Aktualisierungsfunktion um den Aktualisierungswert aktualisiert. Mit anderen Worten wird durch die Authentifizierungseinheit eine Aktualisierung des Geheimwertes durchgeführt, wobei aus dem bereits vorhandenen Geheimwert und dem Aktualisierungswert mittels der vorbestimmten Aktualisierungsfunktion der aktualisierte Geheimwert berechnet wird. Durch diesen Geheimwert wird der ursprünglich in der Authentifizierungseinheit gespeicherte Geheimwert ersetzt. Dadurch wird in der Authentifizierungseinheit derselbe aktualisierte Geheimwert berechnet wie in der zentralen Recheneinheit. Somit liegen in der Authentifizierungseinheit und der zentralen Recheneinheit zum Ende des Verfahrensschritts die gleichen aktualisierten Geheimwerte für einen zukünftigen Authentifizierungsvorgang vor. Die Aktualisierungsfunktion kann beispielsweise eine SOR-Funktion (Exklusiv-Oder-Verknüpfung) sein.

Durch die Weiterbildung ergibt sich der Vorteil, dass der von der zentralen Recheneinheit und der Authentifizierungseinheit geteilte Geheimwert auf eine Übereinstimmung überprüft wird und während des Verfahrens aktualisiert wird. Dadurch wird sichergestellt, dass die Geheimwerte synchron bleiben.

Eine Weiterbildung der Erfindung sieht vor, dass der aus der Anfragetabelle auszulesende Anfragebefehl und der aus der Kennwerttabelle auszulesende Kennwert mittels einer Auswahlfunktion in Abhängigkeit von dem Sitzungsprüfwert ausgewählt werden. Mit anderen Worten ist in der zentralen Recheneinheit und in der Authentifizierungseinheit eine vorbestimmte Auswahlfunktion gespeichert. Die Auswahlfunktion wird durch die zentrale Recheneinheit und die Authentifizierungseinheit dazu verwendet, auf Grundlage des Initialwerts, des weiteren Initialwerts und des Geheimwerts den aus der Anfragetabelle auszulesenden Anfragebefehl und den aus der Kennwerttabelle auszulesenden Kennwert zu bestimmen. Dadurch ergibt sich der Vorteil, dass die Auswahl von drei Variablen abhängt. Eine Beeinflussung der Auswahl des Kennwerts und des Anfragebefehls kann hierdurch vermieden werden.

Eine Weiterbildung der Erfindung sieht vor, dass die Auswahlfunktion der Luhn-Algoritmus ist. Mit anderen Worten handelt es sich bei der Auswahlfunktion um eine Modulo-10-Funktion. Die Auswahl erfolgt somit durch eine Bestimmung eines Indexwertes, der dem auszulesenden Kennwert und dem auszulesendem Anfragebefehl zugeordnet ist. Der Indexwert wird mittels einer Division des Sitzungsprüfwerts durch 10 mit Rest bestimmt, wobei der Indexwert der Rest ist, der bei der Division des Sitzungsprüfwerts durch 10 übrig bleibt.

Eine Weiterbildung der Erfindung sieht vor, dass nach einem Empfang des Freigabesignals durch die Diensteinheit ein Kommunikationsvorgang zwischen der Diensteinheit und der Authentifizierungseinheit und/oder einem Steuergerät des Fahrzeugs eingeleitet wird. Mit anderen Worten erfolgt eine Kommunikation der Diensteinheit mit der Authentifizierungseinheit und/oder dem Steuergerät des Fahrzeugs, sobald die Authentifizierungseinheit durch die zentrale Recheneinheit authentifiziert wurde.

Eine Weiterbildung der Erfindung sieht vor, dass durch die Diensteinheit eine Dienstkennung an die zentrale Recheneinheit übertragen wird. Durch die zentrale Recheneinheit wird überprüft, ob die Dienstkennung für den Identifikationswert in der zentralen Recheneinheit freigeschaltet ist. Durch die zentrale Recheneinheit wird das vorbestimmte Freigabesignal nur an die Diensteinheit ausgesandt, wenn die Dienstkennung für den Identifikationswert aktiviert ist. Mit anderen Worten umfasst das Verfahren eine Übertragung der Dienstkennung von der Diensteinheit an die zentrale Recheneinheit. Die Dienstkennung kann beispielsweise die Diensteinheit eindeutig identifizieren oder eine durch die Diensteinheit bereitgestellte Funktion. In der zentralen Recheneinheit kann ein Status der Dienstkennung für den Identifikationswert festgelegt sein. Der Status "aktiviert" bedeutet, dass die Freischaltung der Diensteinheit oder der durch die Diensteinheit bereitgestellten Funktion für die Authentifizierungseinheit mit dem Identifikationswert zulässig ist. Der Status "deaktiviert" bedeutet, dass die Freischaltung der Diensteinheit oder der durch die Diensteinheit bereitgestellten Funktion für die Authentifizierungseinheit mit dem Identifikationswert nicht zulässig ist. Es kann beispielsweise vorgesehen sein, dass das Freigabesignal durch die zentrale Recheneinheit nur versandt wird, wenn die Dienstkennung für den Identifikationswert in der zentralen Recheneinheit freigeschaltet ist.

Eine Weiterbildung der Erfindung sieht vor, dass durch die zentrale Recheneinheit ein vorbestimmtes Rückfragesignal an eine Eingabeeinheit übertragen wird, wenn die Dienstkennung für den Identifikationswert deaktiviert ist. Mit anderen Worten erfolgt eine Übertragung des Rückfragesignals an die Eingabeeinheit, wenn die Authentifizierungseinheit mit dem zugehörigen Identifikationswert nicht für die Diensteinheit oder die Funktion der Diensteinheit mit der zugehörigen Dienstkennung freigeschaltet ist. Bei der Eingabeeinheit kann es sich beispielsweise um ein Mobiltelefon, ein Tablet, ein Eingabesystem eines Fahrzeugs oder ein mobiles Nutzergerät handeln. Durch die Eingabeeinheit wird bei einem Empfang des Rückfragesignals ein vorbestimmtes Warnsignal ausgegeben. Bei dem Warnsignal kann es sich beispielsweise um ein haptisches, akustisches oder visuelles Signal handeln. Bei einer vorbestimmten Benutzereingabe wird durch die Eingabeeinheit ein Aktivierungssignal an die zentrale Recheneinheit versandt. Mit anderen Worten erfolgt eine Übertragung des Aktivierungssignals zu von der Eingabeeinheit an die zentrale Recheneinheit, wenn die vorbestimmte Benutzereingabe an der Eingabeeinheit erfolgt ist. Es kann beispielsweise vorgesehen sein, dass das Warnsignal eine Textnachricht umfasst, welche den Nutzer zur Freischaltung der Funktion auffordert. Tippt der Benutzer daraufhin beispielsweise einen vorbestimmten Bereich auf einem berührungssensitiven Bildschirm als Benutzereingabe an, kann durch die Eingabeeinheit das Aktivierungssignal generiert und an die zentrale Recheneinheit versandt werden. Durch die zentrale Recheneinheit wird die Dienstkennung bei dem Empfang des Aktivierungssignals für den Identifikationswert aktiviert. Alternativ oder zusätzlich wird das Freigabesignal an die Diensteinheit ausgesandt.

Eine Weiterbildung der Erfindung sieht vor, dass die Übertragungen zwischen der Authentifizierungseinheit und der zentralen Recheneinheit über die Diensteinheit geführt werden. Mit anderen Worten werden Übertragungen von der Authentifizierungseinheit an die zentrale Recheneinheit und von der zentralen Recheneinheit an die Authentifizierungseinheit über die Diensteinheit geleitet. Es kann beispielsweise vorgesehen sein, dass Nachrichten von der Authentifizierungseinheit an die Diensteinheit versandt werden, durch diese empfangen werden und an die zentrale Recheneinheit weitergeleitet werden. Dadurch ergibt sich der Vorteil, dass keine direkte Übertragung zwischen der Authentifizierungseinheit und der zentralen Recheneinheit erforderlich ist. Die Übertragungen können beispielsweise seitens der Authentifizierungseinheit mittels Wifi-direkt, Bluetooth, Car-2-X oder vergleichbarer kabelloser Übertragungswege mit Reichweiten im Meterbereich erfolgen. Eine Kontaktierung der zentralen Recheneinheit über mobiles Internet ist somit nicht erforderlich.

Nicht unter den Schutzumfang des Anspruchs fällt ein Verfahren zur Generierung einer Kennwerttabelle. Durch eine Eingabeeinheit wird ein Kopplungssignal an eine zentrale Recheneinheit übertragen, durch die zentrale Recheneinheit wird daraufhin zumindest einen Anfragebefehl zur Anfrage eines Kennwerts aus einer Fahrzeugkomponente des Fahrzeugs an die Authentifizierungseinheit übertragen. Der Anfragebefehl wird durch die Authentifizierungseinheit in einer Anfragetabelle in der Authentifizierungseinheit gespeichert. Zudem wird der Anfragebefehl von der Authentifizierungseinheit an eine Schnittstelle des Fahrzeugs ausgegeben. In dem Fahrzeug wird der Anfragebefehl durch die Fahrzeugkomponente ausgeführt und als Antwort der Kennwert erzeugt. Der Kennwert wird aus der Schnittstelle durch die Authentifizierungseinheit empfangen. Von der Authentifizierungseinheit wird der Kennwert an die zentrale Recheneinheit übertragen. Durch die zentrale Recheneinheit wird der Kennwert in der Kennwerttabelle der zentralen Recheneinheit gespeichert.

Nicht unter den Schutzumfang des Anspruchs fällt eine Eingabeeinheit, die dazu eingerichtet ist, ein Kopplungssignal an eine zentrale Recheneinheit zu versenden, um ein Verfahren zur Generierung einer Kennwerttabelle einzuleiten.

Nicht unter den Schutzumfang des Anspruchs fällt eine Authentifizierungseinheit, die dazu eingerichtet ist, einen Initialwert zu empfangen, in Abhängigkeit von dem Initialwert einen Anfragebefehl aus einer in der Authentifizierungseinheit gespeicherten Anfragetabelle auszulesen und den Anfragebefehl an eine Schnittstelle des Fahrzeugs auszugeben. Die Authentifizierungseinheit ist dazu eingerichtet, einen durch eine Fahrzeugkomponente in dem Fahrzeug als Antwort auf den Anfragebefehl erzeugten Ausgabewert aus der Schnittstelle zu empfangen und mittels einer vorbestimmten Prüfwertfunktion einen dem Ausgabewert zugeordneten Fahrzeugprüfwert zu berechnen und den, dem Ausgabewert zugeordneten, Fahrzeugprüfwert an eine zentrale Recheneinheit zu übertragen.

Zu der Erfindung gehört auch eine zentrale Recheneinheit gemäß Anspruch 11, die dazu eingerichtet ist, einen Fahrzeugprüfwert und einen Initialwert zu empfangen und in Abhängigkeit von dem Initialwert einen Kennwert aus einer in der zentralen Recheneinheit gespeicherten Kennwerttabelle auszulesen. Die zentrale Recheneinheit ist dazu eingerichtet, mittels einer vorbestimmten Prüfwertfunktion einen dem Kennwert zugeordneten Fahrzeugprüfwert zu berechnen, diesen auf eine Übereinstimmung mit dem empfangenen Fahrzeugprüfwert zu überprüfen und bei einer Übereinstimmung der Prüfwerte ein vorbestimmtes Freigabesignal an eine Diensteinheit zu versenden.

Nicht unter den Schutzumfang des Anspruchs fällt eine Diensteinheit, die dazu eingerichtet ist, einen Initialwert zu erzeugen und an eine Authentifizierungseinheit zu versenden und bei einem Empfang eines vorbestimmten Freigabesignals eine vorbestimmte Funktion freizuschalten.

Zu der Erfindung gehören auch Weiterbildungen der erfindungsgemäßen zentralen Recheneinheit, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen zentralen Recheneinheit hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: ein Verfahren zur Generierung einer Kennwerttabelle;
- Fig. 2: Verfahren zur Authentifizierung eines Fahrzeugs gegenüber einer Diensteinheit mittels einer fahrzeugexternen zentralen Recheneinheit;
- Fig. 3: eine Kennwerttabelle und die zugeordnete Anfragetabelle; und
- Fig. 4: ein Verfahren zur Authentifizierung eines Fahrzeugs gegenüber einer Diensteinheit mittels einer fahrzeugexternen zentralen Recheneinheit.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

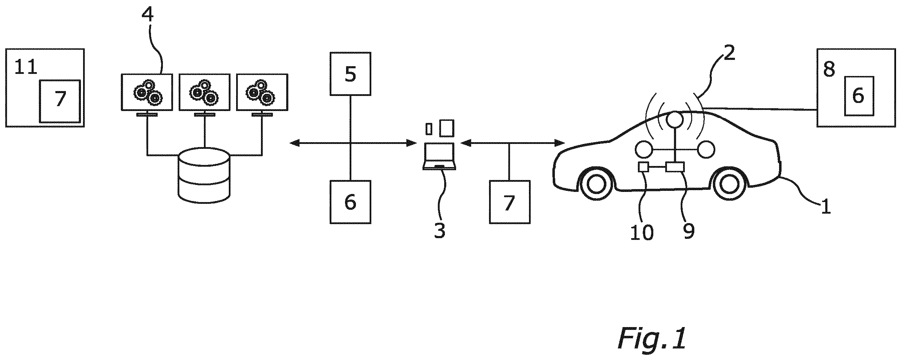

Fig. 1 zeigt ein Verfahren zur Generierung einer Kennwerttabelle. Das Ziel einer Kopplung besteht darin, ein Fahrzeug 1 in ein System einzubinden, damit es gegenüber Dritten authentifiziert werden kann. Um eine Authentifizierung des Fahrzeugs 1 zu ermöglichen, ist es vorgesehen, eine Authentifizierungseinheit 2 zu verwenden. Die Authentifizierungseinheit 2 kann beispielsweise einen Mikroprozessor und/oder einen Mikrocontroller umfassen. Die Authentifizierungseinheit 2 kann in dem Fahrzeug 1 verbaut sein oder als Zubehör an dem Fahrzeug 1 angeschlossen sein. In diesem Fall kann es beispielsweise vorgesehen sein, dass die Authentifizierungseinheit 2 beispielsweise als Stecker (Stick bzw. Dongle) mit einer OBD-Schnittstelle des Fahrzeugs 1 verbunden ist. Zur Kopplung des Fahrzeugs 1 kann es vorgesehen sein, dass durch einen Fahrer oder Inhaber des Fahrzeugs 1 eine vorbestimmte Benutzereingabe in einer Eingabeeinheit 3 getätigt wird. Die Eingabeeinheit 3 kann beispielsweise ein mobiles Endgerät, insbesondere ein Smartphone, ein Tablet oder ein Laptop sein. Es kann auch eine Konsole des Fahrzeugs 1 sein.

Es kann vorgesehen sein, dass der Benutzer im Rahmen der Benutzereingabe persönliche Identifikationsdaten und oder Anmeldedaten einträgt. Nach der Benutzereingabe kann durch die Eingabeeinheit 3 ein Kopplungssignal 5 generiert und an eine zentrale Recheneinheit 4 übertragen werden. Das Kopplungssignal 5 kann beispielsweise die Anmeldedaten des Nutzers und/oder Informationen über das Fahrzeug 1 und/oder die Authentifizierungseinheit 2 umfassen. Die Übertragung des Kopplungssignals 5 kann beispielsweise über mobiles Internet erfolgen. Die zentrale Recheneinheit 4 kann als Reaktion auf den Empfang des Kopplungssignals 5 zumindest einen Anfragebefehl 6 zur Anfrage eines zugeordneten Kennwerts 7 an die Authentifizierungseinheit 2 versenden. Der Versand kann beispielsweise direkt an die Authentifizierungseinheit 2 über mobiles Internet oder über die Eingabeeinheit 3 erfolgen. Der Anfragebefehl 6 kann durch die Authentifizierungseinheit 2 empfangen und in einer Anfragetabelle 8 gespeichert werden. Der Anfragebefehl 6 kann zusätzlich von der Authentifizierungseinheit 2 an eine Schnittstelle 9 des Fahrzeugs 1 ausgegeben wird. Bei der Schnittstelle 9 kann es sich beispielsweise um einen OBD-Anschluss des Fahrzeugs 1 oder einen Anschluss an ein Ethernet-Netzwerk des Fahrzeugs 1 handeln.

In dem Fahrzeug 1 kann eine Fahrzeugkomponente 10 den Anfragebefehl 6 empfangen, ausführen und als Antwort den Kennwert 7 als Ausgabewert ausgeben. Bei der Fahrzeugkomponente 10 kann es sich beispielsweise um ein Motorsteuergerät des Fahrzeugs 1 handeln. Der Kennwert 7 kann beispielsweise eine Identifikationsnummer der Motorsteuereinheit sein. Der Kennwert 7 kann aus der Schnittstelle 9 des Fahrzeugs 1 ausgegeben und durch die Authentifizierungseinheit 2 empfangen werden. Durch die Authentifizierungseinheit 2 kann der Kennwert 7 an die zentrale Recheneinheit 4 übertragen werden. Die zentrale Recheneinheit 4 kann den Kennwert 7 empfangen und in einer Kennwerttabelle 11 gespeichert werden. Die Kennwerttabelle 11 und die Anfragetabelle 8 können eine Indizierung aufweisen, wobei einem Anfragebefehl 6 in der Anfragetabelle 8 der jeweilige Kennwert 7 in der Kennwerttabelle 11 über einen Indexwert 13 zugeordnet ist. Durch die Erstellung der Anfragetabelle 8 und der Kennwerttabelle 11 wird ein geteiltes Geheimnis der zentralen Recheneinheit 4 und des der Authentifizierungseinheit 2 bereitgestellt. Die Anfragebefehle 6 sind so ausgebildet, dass sie zu der Ausgabe desselben Kennwerts 7 aus dem Fahrzeug 1 führen. Der Vorteil besteht darin, dass die Authentifizierungseinheit 2 mit dem Fahrzeug 1 funktionell miteinander verbunden ist. Wird beispielsweise die Authentifizierungseinheit 2 in ein anderes Fahrzeug integriert, führt dies dazu, dass bei der Eingabe des Anfragebefehls 6 an das Fahrzeug 1 ein anderer Kennwert 7 ausgegeben wird. Während der Kopplung kann durch die zentrale Recheneinheit ein Geheimwert S generiert werden. Der Geheimwert S kann an die Authentifizierungseinheit 2 übertragen werden und als weiterer Geheimwert S' in der zentralen Recheneinheit 4 gespeichert werden.

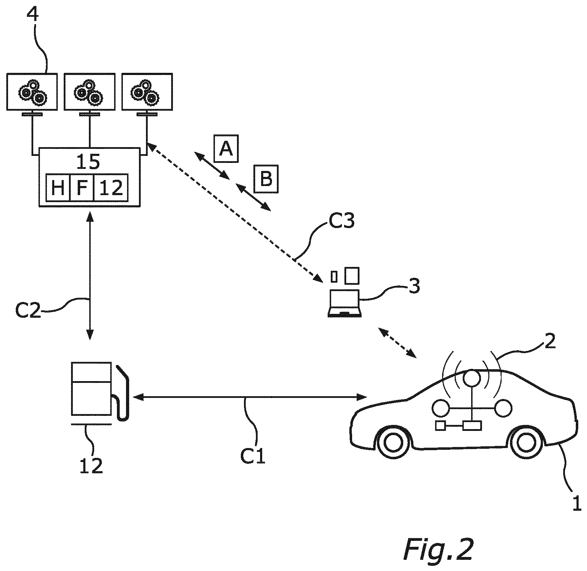

Fig. 2 zeigt eine Authentifizierung des Fahrzeugs 1 an einer Diensteinheit 12 über die zentrale Recheneinheit 4. Es kann vorgesehen sein, dass eine Funktion, die mit dem Fahrzeug 1 in Verbindung steht und durch eine Diensteinheit 12 erfolgt, eine Authentifizierung des Fahrzeugs 1 gegenüber der Diensteinheit erfordert. Bei der Diensteinheit 12 kann es sich beispielsweise um eine Zapfsäule einer Tankstelle, ein Ladegerät oder eine Schranke handeln. Es kann vorgesehen sein, dass nur bestimmte Fahrzeuge für die Diensteinheit 12 oder eine Funktion der Diensteinheit 12 vorgesehen sind. Eine Kommunikationsverbindung C1 zwischen dem Fahrzeug 1 oder der Authentifizierungseinheit 2 und der Diensteinheit 12 kann beispielsweise über eine unsichere Verbindung bestehen. Dies kann beispielsweise bedeuten, dass die Kommunikation unverschlüsselt verläuft. Es kann aus diesem Grund ausgeschlossen sein, dass über die Kommunikationsverbindung C1 sensible Informationen zur Authentifizierung des Fahrzeugs 1 gegenüber der Diensteinheit 12 versandt werden. Um dennoch eine sichere, zuverlässige Authentifizierung des Fahrzeugs 1 gegenüber der Diensteinheit 12 zu ermöglichen, wird die Authentizität des Fahrzeugs 2 gegenüber der Diensteinheit 12 durch die zentrale Recheneinheit 4 bestätigt.

Es kann beispielsweise vorgesehen sein, dass ein Fahrer des Fahrzeugs 1 zu Beginn eines Authentifizierungsverfahrens eine Eingabe in der Diensteinheit 12 tätigt. Es kann auch vorgesehen sein, dass eine Einleitung des Authentifizierungsverfahrens automatisch durch die Diensteinheit 12 eingeleitet wird, wenn sich beispielsweise das Fahrzeug 1 in einem vorbestimmten Abstand zur Diensteinheit 12 befindet. Dies kann beispielsweise vorliegen, wenn sich das Fahrzeug 1 vor einer als Schranke ausgebildeten Diensteinheit 12 befindet. Das Verfahren kann vorsehen, dass eine Kommunikation zwischen der Diensteinheit 12 und der Authentifizierungseinheit 2 eingeleitet wird. Während des Verfahrens kann gleichzeitig eine Kommunikation zwischen der Diensteinheit 12 und der zentralen Recheneinheit 4 eingerichtet werden. Zur Ermöglichung einer sicheren Authentifizierung kann es vorgesehen sein, dass die Kommunikation zwischen der zentralen Recheneinheit 4 und der Diensteinheit 12 über eine gesicherte Kommunikationsverbindung C2 verschlüsselt verläuft. Es kann vorgesehen sein, dass eine zusätzliche Kommunikationsverbindung C3 zwischen der Authentifizierungseinheit 2 und der zentralen Recheneinheit 4 eingerichtet wird, welche über die Eingabeeinheit 3 erfolgen kann.

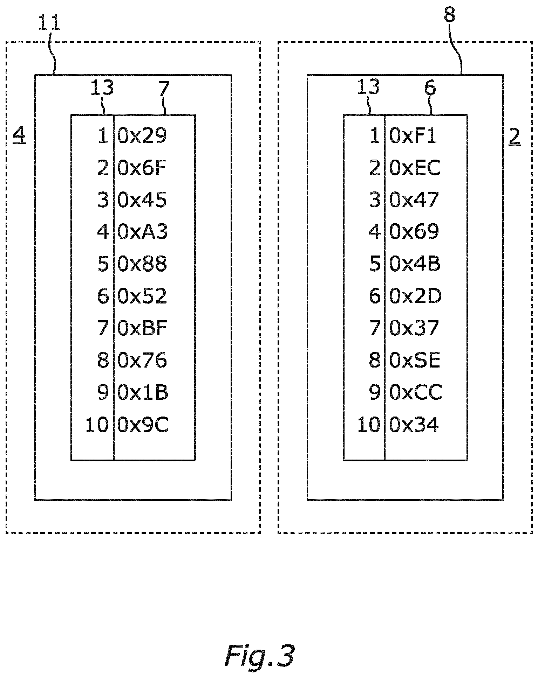

Fig. 3 zeigt eine mögliche Kennwerttabelle 11 mit den jeweiligen Kennwerten 7, die in der zentralen Recheneinheit 4 gespeichert ist. Jedem der Kennwerte 7 kann ein Indexwert 13 zugeordnet sein. Bei Kennwerten 7 kann es sich um Werte handeln, die das Fahrzeug 1 bzw. Komponenten des Fahrzeugs 10 identifizieren. Es kann sich dabei insbesondere um eine Marke des Fahrzeugs 1, ein Modell, ein Baujahr, eine VIN-Nummer, eine Fahrgestellnummer, oder eine Identifikationsnummer einer Motorsteuereinheit handeln. Die einzelnen Kennwerte 7 bilden insgesamt in der Kennwerttabelle 11 einen sogenannten Fingerabdruck des Fahrzeugs 1, welcher eine eindeutige Identifikation des Fahrzeugs 1 ermöglicht.

Als korrespondierendes Gegenstück zur Authentifizierung des Fahrzeugs 1 ist in der Authentifizierungseinheit 2 eine Anfragetabelle 8 hinterlegt, in der die Anfragebefehle 6 mit den zugeordneten Indexwerten 13 gespeichert sein können. Einem jeweiligen Anfragebefehl 6 mit einem jeweiligen Indexwert 13 ist ein korrespondierender Kennwert 7 in der Kennwerttabelle 11 mit demselben Indexwert 13 zugeordnet. Der Anfragebefehl 6 kann beispielsweise ein Code für den CAN-Bus des Fahrzeugs 1 sein, der eine Ausgabe des zugeordneten Kennwertes 7 aus der Schnittstelle 9 bewirkt. Mit anderen Worten handelt es sich bei den Kennwerten 7 in der Kennwerttabelle 11 um die zu erwartenden Werte, die bei einer Anfrage an das Fahrzeug 1 mittels des zugeordneten Anfragebefehls 6 durch das Fahrzeug 1 ausgegeben werden sollen. Es kann sich bei den Anfragebefehlen 6 beispielsweise um Anfragebefehle 6 handeln, die durch die zentrale Recheneinheit 4 während des Kopplungsverfahrens an die Authentifizierungseinheit 2 übertragen worden sind, um die zugeordneten Kennwerte 7 des Fahrzeugs 1 abzufragen.

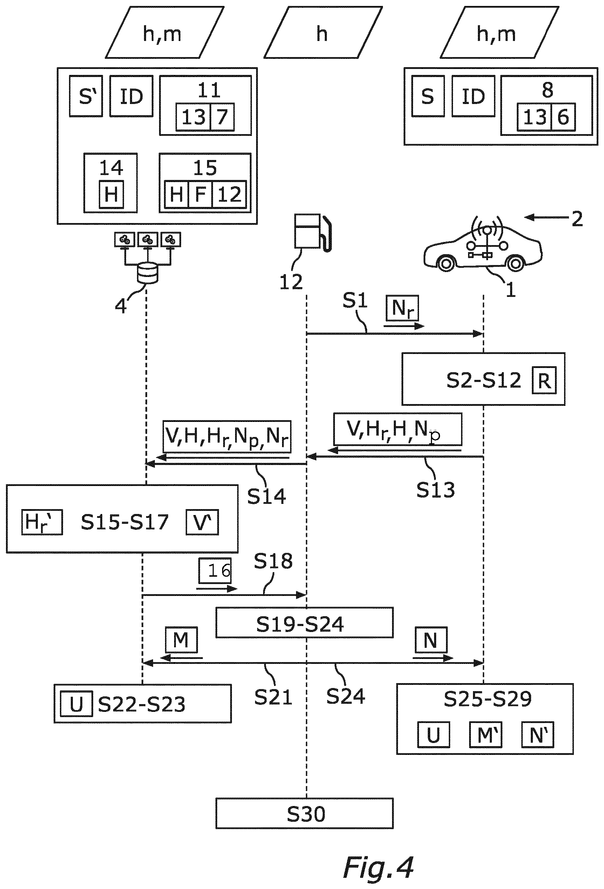

Fig. 4 zeigt einen Ablauf eines Verfahrens zur Authentifizierung eines Fahrzeugs 1. Es kann vorgesehen sein, dass die zentrale Recheneinheit 4, die Diensteinheit 12 und die Authentifizierungseinheit 2 dazu eingerichtet sind, Prüfwerte mittels einer Prüfwertfunktion h durchzuführen. Es kann vorgesehen sein, dass die zentrale Recheneinheit 4 und die Authentifizierungseinheit 2 miteinander gekoppelt sind, das bedeutet, dass mit der zentralen Recheneinheit 4 und der Authentifizierungseinheit 2 das Kopplungsverfahren durchgeführt worden ist. Gekoppelt kann beispielsweise bedeuten, dass in der zentralen Recheneinheit 4 der weitere Geheimwert S', der Identifikationswert ID der Authentifizierungseinheit 2 und die Kennwerttabelle 11 gespeichert sind. In der Authentifizierungseinheit 2 können der Geheimwert S, der Identifikationswert ID und die Anfragetabelle 8 gespeichert sein.

Zu Beginn des Verfahrens kann es vorgesehen sein, dass durch die Diensteinheit 12 ein Initialwert Nr mittels einer Zufallsfunktion oder einer Pseudozufallsfunktion generiert wird. Der Initialwert Nr kann von der Diensteinheit 12 an die Authentifizierungseinheit 2 übertragen werden (S1).

Nach dem Empfang des Initialwerts Nr durch die Authentifizierungseinheit 2 kann durch die Authentifizierungseinheit 2 ein weiterer Initialwert Np mittels einer Zufallsfunktion generiert werden (S2).

Die Authentifizierungseinheit 2 kann mittels der Prüfwertfunktion h aus dem Geheimwert S, dem ersten Initialwert Nr und dem zweiten Initialwert Np einen Sitzungsprüfwert V berechnen, der dem Geheimwert S, dem ersten Initialwert Nr und dem zweiten Initialwert Np zugeordnet sein kann (S3) .

Der nächste Teilschritt S4 umfasst eine Bestimmung des Indexwertes 13 durch die Authentifizierungseinheit 2, um einen der Anfragebefehle 6 aus der Anfragetabelle 8 auslesen zu können. Es kann vorgesehen sein, dass die Auswahl des Indexwertes 13 in Abhängigkeit von dem Geheimwert S, dem Initialwert Nr und dem zweiten Initialwert Np erfolgt. Zu diesem Zweck kann es vorgesehen sein, dass aus dem Sitzungsprüfwert V mittels einer Auswahlfunktion m der Indexwert 13 berechnet wird. Es kann beispielsweise vorgesehen sein, dass der Indexwert 13 ein Restwert einer Division des Sitzungsprüfwerts V durch die Zahl 10 ist.

Aus der Anfragetabelle 8 wird durch die Authentifizierungseinheit 2 der Anfragebefehl 6 ausgelesen, der dem berechneten Indexwert 13 zugeordnet ist (S5). Der ausgelesene Anfragebefehl 6 wird durch die Authentifizierungseinheit 2 an die Schnittstelle 9 des Fahrzeugs 1 ausgegeben und durch die Fahrzeugkomponente 10 empfangen (S6). Wie im Kopplungsverfahren wird durch die Fahrzeugkomponente 10 ein Antwortsignal R ausgegeben, welches mit dem Kennwert 7 identisch ist (S7). Die Authentifizierungseinheit 2 kann das Antwortsignal R aus der Schnittstelle 9 empfangen (S10). Mittels der Prüfwertfunktion h kann die Authentifizierungseinheit 2 einen, dem Antwortsignal R zugeordneten, Fahrzeugprüfwert Hr berechnen (S11). Zusätzlich kann es vorgesehen sein, dass durch die Authentifizierungseinheit 2 aus dem Identifikationswert ID mittels der Prüfwertfunktion h ein Identifikationsprüfwert H berechnet wird (S12).

Der Sitzungsprüfwert V, der Fahrzeugprüfwert Hr, der Identifikationsprüfwert H und der weitere Initialwert Np können von der Authentifizierungseinheit 2 an die Diensteinheit 12 übertragen werden (S13).

Die Diensteinheit 12 kann die Werte empfangen und diese zusammen mit dem Initialwert Nr an die zentrale Recheneinheit 4 weiterleiten (S14).

Die zentrale Recheneinheit 4 kann bei einem Empfang der Werte in einem Schritt S15 überprüfen, ob der Identifikationsprüfwert H der Authentifizierungseinheit 2 in einer Identifikationstabelle 14 in der externen Recheneinheit 4 registriert ist. Zu diesem Zweck kann die zentrale Recheneinheit 4 den Identifikationsprüfwert H mit in einer Identifikationstabelle 14 hinterlegten Identifikationsprüfwerten vergleichen. Stimmt der übertragene Identifikationsprüfwert H mit einem der hinterlegten Identifikationsprüfwerten H in der Identifikationstabelle 14 überein, bedeutet dies, dass die Authentifizierungseinheit 2 in der zentralen Recheneinheit 4 registriert ist.

In einem Schritt S16 erfolgt durch die zentrale Recheneinheit 4 mittels der Prüfwertfunktion h eine Berechnung eines weiteren Sitzungsprüfwerts V' aus dem weiteren Geheimwert S', dem Initialwert Nr und dem weiteren Initialwert Np. Stimmt der von der zentralen Recheneinheit 4 berechnete weitere Sitzungsprüfwert V' mit dem von der Authentifizierungseinheit 2 versandten Sitzungsprüfwert V überein, kann in einem nächsten Schritt S17 mittels des Auswahlalgorithmus m aus dem weiteren Sitzungsprüfwert V' der Indexwert 13 berechnet werden. Aus der Kennwerttabelle 11 wird durch die zentrale Recheneinheit 4 der Kennwert 7 ausgelesen, welcher dem berechneten Indexwert 13 zugeordnet ist. Für den ausgelesenen Kennwert 7 kann mittels der Prüfwertfunktion h ein weiterer Fahrzeugprüfwert Hr' berechnet werden. Im Anschluss daran wird durch die zentrale Recheneinheit 4 überprüft, ob der von der zentralen Recheneinheit 4 berechnete weitere Fahrzeugprüfwert Hr' mit dem von der Authentifizierungseinheit 2 übersandten Fahrzeugprüfwert Hr übereinstimmt.

Ist dies gegeben, erfolgt durch die zentrale Recheneinheit 4 ein Versand eines Freigabesignals 16 an die Diensteinheit 12, um zu signalisieren, dass die Authentifizierungseinheit 2 erfolgreich durch die zentrale Recheneinheit 4 authentifiziert wurde (S18). Bei dem Freigabesignal kann es sich beispielsweise um den weiteren Geheimwert S' handeln.

Die Diensteinheit 12 kann aus dem weiteren Geheimwert S' und dem Initialwert Nr mittels der Prüfwertfunktion h einen ersten Freigabeprüfwert M berechnen (S19). Aus dem ersten Freigabeprüfwert M kann die Diensteinheit 12 einen zweiten Freigabeprüfwert N berechnen (S20).

In einem folgenden Schritt kann die Diensteinheit 12 den ersten Freigabeprüfwert M an die zentrale Recheneinheit 4 übersenden (S21).

Die zentrale Recheneinheit 4 kann mittels der Prüfwertfunktion h aus dem Geheimwert S und dem ersten Freigabeprüfwert M einen Aktualisierungswert U berechnen (S22).

Mittels einer Aktualisierungsfunktion kann die zentrale Recheneinheit 4 den weiteren Geheimwert S' aktualisieren (S23), sodass er nach der Aktualisierung einen anderen Wert aufweist als vor der Aktualisierung.

An die Authentifizierungseinheit 2 kann durch die Diensteinheit 12 der zweite Freigabeprüfwert N übermittelt werden (S24).

Die Authentifizierungseinheit 2 kann aus dem Initialwert Nr und dem Geheimwert S mittels der Prüfwertfunktion den ersten Freigabeprüfwert M' berechnen (S25) und aus dem ersten Freigabeprüfwert M' mittels der Prüfwertfunktion den zweiten Freigabeprüfwert N' (S26). In einem weiteren Schritt S27 wird durch die Authentifizierungseinheit 2 überprüft, ob der von ihr berechnete zweite Freigabeprüfwert N' mit dem empfangenen zweiten Freigabeprüfwert N übereinstimmt. Ist diese Bedingungen erfüllt, wird mittels der Prüfwertfunktion aus dem Geheimwert S und dem zweiten Freigabeprüfwert M' der Aktualisierungswert U berechnet (S28). Mittels der Aktualisierungsfunktion wird der Geheimwert S unter Verwendung des Aktualisierungswerts U durch einen aktualisierten Geheimwert S ersetzt (S29).

In einem weiteren Schritt S30 kann es vorgesehen sein, dass ein vorbestimmter Kommunikationseingang zwischen der Diensteinheit 12 und der Authentifizierungseinheit 2 oder einem Steuergerät des Fahrzeugs 1 eingeleitet wird. Es kann auch vorgesehen sein, dass eine vorbestimmte Funktion in der Diensteinheit 12 aktiviert wird. Die vorbestimmte Funktion kann beispielsweise ein Öffnen einer Schranke, eine Ausgabe eines Treibstoffs oder eine Einleitung eines Ladevorgangs umfassen.

Das Fahrzeug ist zu einem integralen Bestandteil unseres Lebens geworden. Durch Fahrzeuge wird der größte Teil an Personen und Güter transportiert. Während eines Lebenszyklus eines Fahrzeugs, der sich von seiner Herstellung bis zu seiner Verschrottung erstreckt, wird durch den Fahrer des Fahrzeugs eine Vielzahl an fahrzeugbezogenen Diensten in Anspruch genommen.

Bisher erfordert die Inanspruchnahme fahrzeugbezogener Dienste Handlungen seitens des Fahrers des Fahrzeugs. So ist es etwa erforderlich, dass der Fahrer schriftlich oder mündlich einen entsprechenden Vertrag abschließt oder einen Automaten bedient. Unter fahrzeugbezogenen Diensten versteht man beispielsweise eine Bereitstellung eines Parkplatzes, ein Betanken des Fahrzeugs oder eine Inanspruchnahme von Wartungsarbeiten oder Pannenhilfen.

Mit der Einführung des Smartphones haben sich das Leben und die Nutzung von Dienstleistungen dramatisch verändert. Heutzutage werden fast alle Dienstleistungen in digitalisierter Form angeboten und können über das Smartphone verwaltet werden. Diese Entwicklung hat sich noch nicht oder nur in einem begrenzten Rahmen auf kraftfahrzeugbezogene Dienste ausgewirkt. Ein kraftfahrzeugbezogener Dienst ist definiert als ein Satz von Transaktionen zwischen einem Dienstanbieter und einem Kunden. Bei dem Kunden handelt es sich beispielsweise um den Fahrer oder den Eigentümer des Fahrzeugs. Kraftfahrzeugbezogene Dienstleistungen erfordern zumindest einen Vertrag, der die Vertragsbestandteile beschreibt, eine Authentifizierung des Fahrers oder des Fahrzeugs, um eine Identität sicherzustellen, und eine Autorisierung des Dienstes durch den Fahrer des Fahrzeugs, beispielsweise in Form einer handschriftlichen oder digitalen Bestätigung.

Typische Beispiele für kraftfahrzeugbezogene Dienste sind beispielsweise das Betanken des Fahrzeugs, das Laden des Fahrzeugs oder die Nutzung eines kostenpflichtigen Parkplatzes für das Fahrzeug.

In Abhängigkeit von der Region oder der Zielgruppe können verschiedene Arten von Transaktionen üblich sein. Im deutschsprachigen Markt ist es verbreitet, dass eine Tankstelle ihre Dienste nur zu bestimmten Geschäftszeiten des Tages anbietet. Die Geschäftszeiten sind durch eine Anwesenheitszeit eines Mitarbeiters der Tankstelle vorgegeben. Während der Geschäftszeiten willigt der Kunde in die Geschäftsbedingungen (Kraftstoffpreis, Zahlungsbedingungen, Mindestabnahmemenge) durch ein Betanken seines Fahrzeugs an der Tankstelle ein. Die Transaktion gilt als abgeschlossen, sobald der Kunde den gekauften Treibstoff an der Kasse der Tankstelle bezahlt hat.

In anderen Ländern, wie beispielsweise in Italien, Kanada und den Vereinigten Staaten von Amerika ist es verbreitet, dass Dienstleistungen einer Tankstelle ganztägig und an jedem Tag der Woche verfügbar sind. Um diese Geschäftszeiten zu ermöglichen, haben die Tankstellen ihre Zapfsäulen mit Zahlungssystemen ausgestattet. Diese Zahlungssysteme erfordern es, dass der Kunde eine Zahlung vor dem Tankvorgang bewilligt. Üblicherweise legt ein Kunde einen bestimmten Betrag (beispielsweise 100 Dollar oder Euro) fest, für den das Fahrzeug betankt werden kann. In dem Fall, dass weniger Kraftstoff getankt wird, wird der tatsächliche Betrag abgerechnet. Wird das Fahrzeug als Teil einer Firmenflotte oder einer Mietwagenflotte betrieben, ist es üblich, dass dem Fahrer Tankkarten bereitgestellt werden. Diese Tankkarten können an bestimmten Tankstellen als Zahlungsmittel verwendet werden. In diesem Fall ist es erforderlich, dass der Kunde während des Zahlungsvorgangs relevante Informationen eingibt. Gewöhnlicherweise handelt es sich dabei um den aktuellen Kilometerstand des zu betankenden Fahrzeugs.

Aus dem genannten Stand der Technik ergeben sich mehrere Nachteile: Kraftfahrzeugbezogene Dienste und die damit verbundenen Transaktionen erfolgen vorwiegend manuell und sind daher zeitaufwendig und mit hohen Kosten verbunden. Aufgrund manueller Bearbeitungsschritte sind die Durchführungen und Transaktionen fehleranfällig. Kraftfahrzeugbezogene Aufzeichnungen werden hauptsächlich auf Papier protokolliert und erfordern aus diesem Grund eine gewissenhafte Führung, um ein vollständiges Protokoll zu gewährleisten. Eine Autorisierung von kraftfahrzeugbezogenen Diensten mittels manueller oder papierbasierter Lösungen ist langsam, fehleranfällig, teuer und erfordert einen hohen Archivierungsaufwand.

Die genannten Probleme können gelöst werden, indem kraftfahrzeugbezogene Dienste, die durch den Fahrer in Anspruch genommen werden, vordefiniert sind und seine Anmeldedaten auf einer zentralen Recheneinheit gespeichert werden. Dabei kann eine automatisierte Authentifizierung und Autorisierung der Dienste an den Diensteinheiten durch die zentrale Recheneinheit erfolgen.

Die Erfindung umfasst vier Hauptkomponenten:
Die erste Komponente ist die Eingabeeinheit 3. Die Eingabeeinheit 3 (beispielsweise ein Smartphone/Tablet/PC/Fahrzeugkonsole) kann eine Benutzerschnittstelle aufweisen, in der der Fahrer seine Zugangsdaten eingeben und die von ihm gewünschten Dienste freischalten kann. Die weiteren Hauptkomponenten sind die Authentifizierungseinheit 2, die Diensteinheit 12, welche sich bei den Dienstanbietern befindet, und die zentrale Recheneinheit 4, die für die Authentifizierung und Autorisierung der Authentifizierungseinheit 2 an der Diensteinheit 12 eingerichtet ist.

In dem Verfahren ist es vorgesehen, dass alle Authentifizierungseinheiten 2, die für das Verfahren vorgesehen sind, ein vorbestimmtes Kopplungsverfahren durchlaufen müssen, wobei der Fahrer seine Anmeldedaten in die zentrale Recheneinheit 4 lädt und die Authentifizierungseinheit 2 mit seinem Fahrzeug 1 verknüpft. Der Fahrer führt dieses Kopplungsverfahren mittels der Eingabeeinheit 3 durch. Sobald das Kopplungsverfahren abgeschlossen ist, kann sich die Authentifizierungseinheit 2, die in dem Fahrzeug 1 angeordnet ist, kabellos an den Diensteinheiten 12 mittels der zentralen Recheneinheit 4 authentifizieren und die angebotenen Dienste nutzen.

Die Lösung ergibt folgende Vorteile:
Die Authentifizierung des Fahrzeugs 1 durch die Authentifizierungseinheit 2 erfolgt über die Kennwerte 7, die aus der Schnittstelle 9 (beispielsweise dem OBD-Port) des Fahrzeugs 1 bereitgestellt werden. Wird die Authentifizierungseinheit 2 mit einem anderen Fahrzeug 1 verwendet, werden durch die Authentifizierungseinheit 2 andere Kennwerte 7 aus der Schnittstelle 9 empfangen. Die Authentifizierung wird folglich scheitern.

Es wird eine schnelle, sichere und automatische Authentifizierung der Fahrer und eine daran anschließende Autorisierung der Dienste an den Diensteinheiten 12 ermöglicht.

Die kraftfahrzeuggebundene Authentifizierung und Autorisierung von Dienstleistungen erfolgt fahrerunabhängig. Dies stellt ein Vorteil für Fahrzeuge 1 dar, die von verschiedenen Fahrern genutzt werden, beispielsweise von mehreren Familienmitgliedern oder verschiedenen Mietern.

Es kann eine schnelle und automatische Authentifizierung von Führerscheinen und Fahrzeugpapieren erfolgen.

Durch das Verfahren wird dem Fahrer ein zentrales System bereitgestellt, durch welches er sich an verschiedenen kraftfahrzeugbezogenen Diensten registrieren kann.

Im Allgemeinen ist die Lösung für alle kraftfahrzeugbezogenen Dienste anwendbar. Insbesondere kann das Verfahren in Zusammenhang mit einem automatisierten und bargeldlosen Zahlen an Tankstellen, einer automatischen Fahrzeugidentifikation und der damit verbundenen Einlassgewährung an Parkplätzen genutzt werden. Es kann auch zur Ermöglichung einer automatischen Übergabe eines Mietwagens zur Anwendung kommen.

Fig. 1 zeigt die Kopplung einer Authentifizierungseinheit 2. Hierbei lädt der Fahrer seine Anmeldedaten auf die zentrale Recheneinheit 4 und wählt die von ihm gewünschten Dienste aus. Die Eingabeeinheit 3 führt den Fahrer durch das Koppelungsverfahren, in welchem die Authentifizierungseinheit 2 mit dem Fahrzeug 1 unter Einbeziehung der zentralen Recheneinheit 4 verknüpft wird. Die zentrale Recheneinheit 4 sucht mithilfe der Authentifizierungseinheit 2 das Fahrzeug 1 nach Daten ab und identifiziert eine Teilmenge an Daten, die sogenannten Kennwerte 7, die während der Nutzungszeit der Authentifizierungseinheit 2 in dem Fahrzeug 1 konstant bleiben. Diese Kennwerte 7 werden als sogenannter Fingerabdruck des Fahrzeugs 1 verwendet und werden auch als Schlüsselsatz bezeichnet. Der Schlüsselsatz kann auch zeitabhängig sein, da es Kennwerte 7 gibt, die zwar transient, aber während der Nutzungszeit der Authentifizierungseinheit 2 für einen bestimmten Fahrer konstant bleiben. Dabei kann es sich beispielsweise um einen Inspektionstermin handeln. So ist es beispielsweise nicht zu erwarten, dass ein Mietwagen während der Mietzeit durch den Mieter gewartet wird und sich der Inspektionstermin dadurch ändert. Die zentrale Recheneinheit 4 zeichnet Daten einschließlich der Fahrerdetails und der Identifikationskennung der

Authentifizierungseinheit 2 auf, die für die Authentifizierung des Fahrzeugs 1 relevant sind.

Fig. 2 zeigt die Anwendung der Authentifizierungseinheit 2. Dies kann nur erfolgen, wenn die Authentifizierungseinheit 2 mit dem Fahrzeug 1 gekoppelt wurde. In diesem Verfahren authentifiziert sich die Authentifizierungseinheit 2 selbst an der Diensteinheit 12. Die Diensteinheit 12 verifiziert mittels der zentralen Recheneinheit 4 die Authentizität der Authentifizierungseinheit 2 und stellt den angefragten Dienst für das Fahrzeug 1 bereit.

Der Fahrer des Fahrzeugs 1 hat die Möglichkeit, zusätzliche Dienste, die er nutzen möchte, während der Verwendung der Authentifizierungseinheit 2 nachträglich freizuschalten. Es kann beispielsweise vorkommen, dass sich der Fahrer während seines Urlaubs in einer Stadt befindet, für die er eine Nutzung von Parkplätzen oder eine Durchführung von Tankvorgängen nicht freigeschaltet hat. Es kann sein, dass er vor einer Tankstelle oder einem Parkplatz mit einer Diensteinheit 12 anhält und die zentrale Recheneinheit 4 seine Identität authentifiziert. Während des Verfahrens kann durch die zentrale Recheneinheit 4 überprüft werden, ob in der Registertabelle 15 für den Identifikationsprüfwert H die Dienstkennung F und/oder die Diensteinheit 12 zulässig sind. Mit anderen Worten kann in der Registertabelle 15 einem jeweiligen Identifikationsprüfwert H zumindest ein Wert zugeordnet sein, der angibt, welche Dienste oder Diensteinheiten 12 durch die zentrale Recheneinheit 4 für den Identifikationsprüfwert H und somit für die Authentifizierungseinheit 2 mit dem zugehörigen Identifikationswert ID freigeschaltet werden. Dabei kann festgestellt werden, dass für die Authentifizierungseinheit 2 die Dienste der Dienstkennung F an der Diensteinheit 12 an diesem Ort nicht freigeschaltet sind. Das Freigabesignal 16 wird somit nicht durch die zentrale Recheneinheit 4 versandt. Es kann in diesem Fall ein Rückfragesignal B an die Eingabeeinheit 3 des Nutzers übersandt werden. Die Eingabeeinheit 3 kann bei einem Empfang des Rückfragesignals B ein Warnsignal ausgegeben, wobei der Nutzer gefragt werden kann, ob er die Dienste an der Diensteinheit 12 trotz der fehlenden Freischaltung nutzen möchte. Dabei können die relevanten Vertragsbestandteile für die Dienste auf der Eingabeeinheit 3 angezeigt werden. Für den Fall, dass der Fahrer in diese Bedingungen mittels einer vorbestimmten Benutzereingabe einwilligt, kann die Eingabeeinheit 3 ein Aktivierungssignal A an die zentrale Recheneinheit 4 übertragen. Die zentrale Recheneinheit 4 kann daraufhin das Freigabesignal 16 an die Diensteinheit 12 versenden und somit die Diensteinheit 12 dazu autorisieren, die Dienste der Dienstkennung F bereitzustellen.

Insgesamt zeigt das Beispiel, wie durch die Erfindung eine automatische Authentifikation von Fahrzeugen zur Autorisierung von fahrzeugbezogenen Diensten bereitgestellt werden kann.

## Patentansprüche

1. Verfahren zur Authentifizierung eines Fahrzeugs (1) gegenüber einer Diensteinheit (12) mittels einer fahrzeugexternen zentralen Recheneinheit (4), wobei
- eine Authentifizierungseinheit (2) in dem Fahrzeug (1) bereitgestellt wird,
- ein Initialwert (Nr) von der Diensteinheit (12) an die Authentifizierungseinheit (2) übertragen wird,
- durch die Authentifizierungseinheit (2) in Abhängigkeit von dem Initialwert (Nr) ein Anfragebefehl (6) aus einer in der Authentifizierungseinheit (2) gespeicherten Anfragetabelle (8) ausgelesen wird,
- der Anfragebefehl (6) von der Authentifizierungseinheit (8) an eine Schnittstelle (9) des Fahrzeugs (1) ausgegeben wird,
- in dem Fahrzeug (1) eine Fahrzeugkomponente (10) den Anfragebefehl (6) ausführt und als Antwort einen Ausgabewert (R) erzeugt,
- der Ausgabewert (R) aus der Schnittstelle (9) durch die Authentifizierungseinheit (2) empfangen wird,
- durch die Authentifizierungseinheit (2) mittels einer vorbestimmten Prüfwertfunktion (h) aus dem Ausgabewert (R) ein Fahrzeugprüfwert (Hr) erzeugt wird,
- der aus dem Ausgabewert (R) erzeugte Fahrzeugprüfwert (Hr) und der Initialwert (Nr) an die zentrale Recheneinheit (4) übertragen werden,
- durch die zentrale Recheneinheit (4) in Abhängigkeit von dem Initialwert (Nr) ein Kennwert (7) aus einer in der zentralen Recheneinheit (4) gespeicherten Kennwerttabelle (11) ausgelesen wird,
- durch die zentrale Recheneinheit (4) mittels der vorbestimmten Prüfwertfunktion (h) aus dem Kennwert (7) ein weiterer Fahrzeugprüfwert (Hr') erzeugt wird,
- der aus dem Ausgabewert (R) erzeugte Fahrzeugprüfwert (Hr) und der aus dem Kennwert (7) erzeugte weitere Fahrzeugprüfwert (Hr') durch die zentrale Recheneinheit (4) miteinander auf eine Übereinstimmung geprüft werden, und
- durch die zentrale Recheneinheit (4) bei einer Übereinstimmung der Fahrzeugprüfwerte (Hr) ein vorbestimmtes Freigabesignal (16) an die Diensteinheit (12) versandt wird.

2. Verfahren nach Anspruch 1, **dadurch gekennzeichnet, dass**
- in der Authentifizierungseinheit (2) ein der jeweiligen Authentifizierungseinheit (2) eindeutig zugeordneter Identifikationswert (ID) gespeichert ist,
- durch die Authentifizierungseinheit (2) mittels der Prüfwertfunktion (h) aus dem Identifikationswert (ID) ein Identifikationsprüfwert (H) generiert wird,
- der Identifikationsprüfwert (H) zusammen mit dem Fahrzeugprüfwert (Hr) an die zentrale Recheneinheit (4) übertragen wird,
- durch die zentrale Recheneinheit (4) der Identifikationsprüfwert (H) mit Einträgen einer in der Recheneinheit (4) gespeicherten Identifikationstabelle (14) auf eine Übereinstimmung geprüft wird, und
- durch die zentrale Recheneinheit (4) das vorbestimmte Freigabesignal (16) an die Diensteinheit (12) nur ausgesendet wird, wenn einer der Einträge der Identifikationstabelle (14) mit dem Identifikationsprüfwert (H) übereinstimmt.

3. Verfahren nach einem der vorhergehenden Ansprüche, **dadurch gekennzeichnet, dass**
- durch die Authentifizierungseinheit (2) ein zweiter Initialwert (Np) generiert wird,
- in der Authentifizierungseinheit (2) ein Geheimwert (S) gespeichert ist,
- in der zentralen Recheneinheit (4) ein weiterer Geheimwert (S0) gespeichert ist,
- durch die Authentifizierungseinheit (2) mittels einer weiteren vorbestimmten Prüfwertfunktion (h) ein Sitzungsprüfwert (V) aus dem Geheimwert (S), dem Initialwert (Nr) und dem weiteren Initialwert (Np) erzeugt wird,
- der Sitzungsprüfwert (V) zusammen mit dem Kennwert (7) zugeordneten Fahrzeugprüfwert (Hr) an die zentrale Recheneinheit (4) übertragen wird,
- durch die zentrale Recheneinheit (4) mittels der Prüfwertfunktion (h) ein weiterer Sitzungsprüfwert (V') aus dem weiteren Geheimwert (S1), dem Initialwert (Nr) und dem weiteren Initialwert (Np) erzeugt wird,
- durch die zentrale Recheneinheit (4) der weitere Sitzungsprüfwert (V') und der Sitzungsprüfwert (V) auf eine Übereinstimmung geprüft werden, und
- durch die zentrale Recheneinheit (4) das vorbestimmte Freigabesignal (16) nur an die Diensteinheit (12) ausgesendet wird, wenn der Sitzungsprüfwert (V) mit dem zweiten Sitzungsprüfwert (V') übereinstimmt.

4. Verfahren nach Anspruch 3, **dadurch gekennzeichnet, dass**
- durch die zentrale Recheneinheit (4) der weitere Geheimwert (S0) als das vorbestimmte Freigabesignal (16) an die Diensteinheit (12) ausgesendet wird,
durch die Diensteinheit (12)
- mittels der Prüfwertfunktion (h) aus dem weiteren Geheimwert (S0) und dem Initialwert (Nr) ein erster Freigabeprüfwert (M) berechnet wird,
- mittels der Prüfwertfunktion (h) aus dem ersten Freigabeprüfwert (M) ein zweiter Freigabeprüfwert (N) berechnet wird,
- der erste Freigabeprüfwert (M) an den externen Zentralrechner (4) übertragen wird,
- der zweite Freigabeprüfwert (N) an die Authentifizierungseinheit (2) übertragen wird,
durch die zentrale Recheneinheit (4)
- mittels der Prüfwertfunktion (h) aus dem weiteren Geheimwert (S0) und dem ersten Freigabeprüfwert (M) ein Aktualisierungswert (U) berechnet wird,
- der weitere Geheimwert (S0) mittels einer vorbestimmten Aktualisierungsfunktion um den Aktualisierungswert (U) aktualisiert wird,
durch die Authentifizierungseinheit (2)
- mittels der Prüfwertfunktion (h) aus dem Geheimwert (S) und dem ersten Initialwert (Nr) ein weiterer erster Freigabeprüfwert (M') berechnet wird,
- mittels der Prüfwertfunktion (h) aus dem weiteren ersten Freigabeprüfwert (M') ein weiterer zweiter Freigabeprüfwert (N') berechnet wird,
- bei einer Übereinstimmung des weiteren zweiten Freigabeprüfwerts (N') mit dem zweiten Freigabeprüfwert (N),
- mittels der Prüfwertfunktion (h) aus dem Geheimwert (S) und dem weiteren ersten Freigabeprüfwert (M') der Aktualisierungswert (U) berechnet wird, und
- der Geheimwert (S) mittels der vorbestimmten Aktualisierungsfunktion um den weiteren Aktualisierungswert (U1) aktualisiert wird.

5. Verfahren nach einem der vorhergehenden Ansprüche, **dadurch gekennzeichnet, dass**
- der aus der Anfragetabelle (8) auszulesende Anfragebefehl (6) und der aus der Kennwerttabelle (11) auszulesende Kennwert (7) mittels einer vorbestimmten Auswahlfunktion in Abhängigkeit von dem Sitzungsprüfwert (V) ausgewählt werden.

6. Verfahren nach Anspruch 5, **dadurch gekennzeichnet, dass** die Auswahlfunktion der Luhn-Algorithmus ist.

7. Verfahren nach einem der vorhergehenden Ansprüche, **dadurch gekennzeichnet, dass** nach einem Empfang des Freigabesignals (16) durch die Diensteinheit (12) ein Kommunikationsvorgang zwischen der Diensteinheit (12) und der Authentifizierungseinheit (2) und/oder einem Steuergerät des Fahrzeugs (1) eingeleitet wird.

8. Verfahren nach einem der vorhergehenden Ansprüche, **dadurch gekennzeichnet, dass**
- durch die Diensteinheit (12) eine Dienstkennung (F) an die zentrale Recheneinheit (4) übertragen wird,
- durch die zentrale Recheneinheit (4) überprüft wird, ob die Dienstkennung (F) für den Identifikationswert (ID) in der zentralen Recheneinheit (4) freigeschaltet ist,
- durch die zentrale Recheneinheit (4) das vorbestimmte Freigabesignal (16) nur an die Diensteinheit (12) ausgesendet wird, wenn die Dienstkennung (F) für den Identifikationswert (ID) aktiviert ist.

9. Verfahren nach einem der vorhergehenden Ansprüche, **dadurch gekennzeichnet, dass** die Übertragungen zwischen der Authentifizierungseinheit (2) und der zentralen Recheneinheit (4) über die Diensteinheit (3) geführt werden.

10. Verfahren nach Anspruch 8 oder 9, **dadurch gekennzeichnet, dass**
- durch die zentrale Recheneinheit (4) ein vorbestimmtes Rückfragesignal (B) an eine Eingabeeinheit (3) übertragen wird, wenn die Dienstkennung (F) für den Identifikationswert (ID) deaktiviert ist,
- durch die Eingabeeinheit (3) bei einem Empfang des Rückfragesignals (B) ein vorbestimmtes Warnsignal ausgegeben wird,
- durch die Eingabeeinheit (3) bei einer vorbestimmten Benutzereingabe ein Aktivierungssignal (A) an die zentrale Recheneinheit (4) versandt wird, und/oder
- durch die zentrale Recheneinheit (4) die Dienstkennung (F) für den Identifikationswert (ID) aktiviert wird.

11. System aufweisend eine Authentifizierungseinheit (2), eine Diensteinheit (12) und eine Recheneinheit (4), dazu eingerichtet, ein Verfahren nach einem der vorhergehenden Ansprüche auszuführen.

## Claims

1. Method for authenticating a vehicle (1) with a service unit (12) by way of a central computer unit (4) external to the vehicle, wherein
- an authentication unit (2) is provided in the vehicle (1),
- an initial value (Nr) is transmitted from the service unit (12) to the authentication unit (2),
- depending on the initial value (Nr), the authentication unit (2) reads a request command (6) from a request table (8) stored in the authentication unit (2),
- the request command (6) is output by the authentication unit (8) to an interface (9) of the vehicle (1),
- in the vehicle (1), a vehicle component (10) executes the request command (6) and generates an output value (R) in response,
- the output value (R) from the interface (9) is received by the authentication unit (2),
- the authentication unit (2) uses a predetermined check value function (h) to generate a vehicle check value (Hr) from the output value (R),
- the vehicle check value (Hr) generated from the output value (R) and the initial value (Nr) are transmitted to the central computer unit (4),
- depending on the initial value (Nr), the central computer unit (4) reads a characteristic value (7) from a characteristic value table (11) stored in the central computer unit (4),
- the central computer unit (4) uses the predetermined check value function (h) to generate a further vehicle check value (Hr') from the characteristic value (7),
- the vehicle check value (Hr) generated from the output value (R) and the further vehicle check value (Hr') generated from the characteristic value (7) are checked with one another for a match by the central computer unit (4), and
- in the event that the vehicle check values (Hr) match, the central computer unit (4) sends a predetermined enable signal (16) to the service unit (12).

2. Method according to Claim 1, **characterized in that**
- an identification value (ID) uniquely associated with the respective authentication unit (2) is stored in the authentication unit (2),
- the authentication unit (2) uses the check value function (h) to generate an identification check value (H) from the identification value (ID),
- the identification check value (H) is transmitted together with the vehicle check value (Hr) to the central computer unit (4),
- the central computer unit (4) checks the identification check value (H) against entries in an identification table (14) stored in the computer unit (4) for a match, and
- the central computer unit (4) sends the predetermined enable signal (16) to the service unit (12) only if one of the entries in the identification table (14) matches the identification check value (H).

3. Method according to either of the preceding claims, **characterized in that**
- the authentication unit (2) generates a second initial value (Np),
- a secret value (S) is stored in the authentication unit (2),
- a further secret value (S0) is stored in the central computer unit (4),
- the authentication unit (2) uses a further predetermined check value function (h) to generate a session check value (V) from the secret value (S), the initial value (Nr) and the further initial value (Np),
- the session check value (V) is transmitted together with the vehicle check value (Hr) associated with the characteristic value (7) to the central computer unit (4),
- the central computer unit (4) uses the check value function (h) to generate a further session check value (V') from the further secret value (S1), the initial value (Nr) and the further initial value (Np),
- the central computer unit (4) checks the further session check value (V') and the session check value (V) for a match, and
- the central computer unit (4) sends the predetermined enable signal (16) to the service unit (12) only if the session check value (V) matches the second session check value (V').

4. Method according to Claim 3, **characterized in that**
- the central computer unit (4) sends the further secret value (S0) as the predetermined enable signal (16) to the service unit (12),
the service unit (12)
- uses the check value function (h) to calculate a first enable check value (M) from the further secret value (S0) and the initial value (Nr),
- uses the check value function (h) to calculate a second enable check value (N) from the first enable check value (M),
- transmits the first enable check value (M) to the external central computer (4),
- transmits the second enable check value (N) to the authentication unit (2),
the central computer unit (4)
- uses the check value function (h) to calculate an update value (U) from the further secret value (S0) and the first enable check value (M),
- uses a predetermined update function to update the further secret value (S0) with the update value (U),
the authentication unit (2)
- uses the check value function (h) to calculate a further first enable check value (M') from the secret value (S) and the first initial value (Nr),
- uses the check value function (h) to calculate a further second enable check value (N') from the further first enable check value (M'),
- in the event that the further second enable check value (N') and the second enable check value (N) match,
- uses the check value function (h) to calculate the update value (U) from the secret value (S) and the further first enable check value (M'), and
- uses the predetermined update function to update the secret value (S) with the further update value (U1).

5. Method according to one of the preceding claims, **characterized in that**
- the request command (6) to be read from the request table (8) and the characteristic value (7) to be read from the characteristic value table (11) are selected by way of a predetermined selection function depending on the session check value (V).

6. Method according to Claim 5, **characterized in that** the selection function is the Luhn algorithm.

7. Method according to one of the preceding claims, **characterized in that** a communication procedure is initiated between the service unit (12) and the authentication unit (2) and/or a controller of the vehicle (1) following reception of the enable signal (16) by the service unit (12).

8. Method according to one of the preceding claims, **characterized in that**
- the service unit (12) transmits a service identifier (F) to the central computer unit (4),
- the central computer unit (4) checks whether the service identifier (F) for the identification value (ID) is activated in the central computer unit (4),
- the central computer unit (4) sends the predetermined enable signal (16) to the service unit (12) only if the service identifier (F) for the identification value (ID) is activated.

9. Method according to one of the preceding claims, **characterized in that** the transmissions between the authentication unit (2) and the central computer unit (4) are routed via the service unit (3).

10. Method according to Claim 8 or 9, **characterized in that**
- the central computer unit (4) transmits a predetermined query signal (B) to an input unit (3) if the service identifier (F) for the identification value (ID) is deactivated,
- the input unit (3) outputs a predetermined warning signal upon receiving the query signal (B),
- in the case of a predetermined user input, the input unit (3) sends an activation signal (A) to the central computer unit (4), and/or
- the central computer unit (4) activates the service identifier (F) for the identification value (ID).

11. System comprising an authentication unit (2), a service unit (12) and a computing unit (4), configured to carry out a method according to one of the preceding claims.

## Revendications

1. Procédé d'authentification d'un véhicule (1) vis-à-vis d'une unité de service (12) au moyen d'une unité de calcul centrale (4) extérieure au véhicule, dans lequel
- une unité d'authentification (2) est fournie dans le véhicule (1),
- une valeur initiale (Nr) est transmise de l'unité de service (12) à l'unité d'authentification (2),
- une instruction de demande (6) est lue en fonction de la valeur initiale (Nr) par l'unité d'authentification (2) à partir d'une table de demandes (8) stockée dans l'unité d'authentification (2),
- l'instruction de demande (6) est délivrée par l'unité d'authentification (8) à une interface (9) du véhicule (1),
- un composant de véhicule (10) du véhicule (1) exécute l'instruction de demande (6) et, en réponse, génère une valeur de sortie (R),
- la valeur de sortie (R) est reçue par l'unité d'authentification (2) en provenance de l'interface (9),
- l'unité d'authentification (2) génère, au moyen d'une fonction de vérification (h) prédéterminée, une valeur de vérification de véhicule (Hr) à partir de la valeur de sortie (R),
- la valeur de vérification de véhicule (Hr) générée à partir de la valeur de sortie (R) et la valeur initiale (Nr) sont transmises à l'unité de calcul centrale (4),
- l'unité de calcul centrale (4) lit, en fonction de la valeur initiale (Nr), une valeur caractéristique (7) à partir d'une table de valeurs caractéristiques (11) stockée dans l'unité de calcul centrale (4),
- l'unité de calcul centrale (4) génère, au moyen de la fonction de vérification (h) prédéterminée, une autre valeur de vérification de véhicule (Hr') à partir de la valeur caractéristique (7),
- la valeur de vérification de véhicule (Hr) générée à partir de la valeur de sortie (R) et l'autre valeur de vérification de véhicule (Hr') générée à partir de la valeur caractéristique (7) sont vérifiées par l'unité de calcul centrale (4) pour vérifier si elles concordent l'une avec l'autre, et
l'unité de calcul centrale (4) envoie un signal de validation prédéterminé (16) à l'unité de service (12) en cas de concordance entre les valeurs de vérification de véhicule (Hr).

2. Procédé selon la revendication 1, **caractérisé en ce que**
- une valeur d'identification (ID) associée de façon univoque à l'unité d'authentification (2) respective est stockée dans l'unité d'authentification (2),
- l'unité d'authentification (2) génère, au moyen de la fonction de vérification (h), une valeur de vérification d'identification (H) à partir de la valeur d'identification (ID),
- la valeur de vérification d'identification (H) est transmise à l'unité de calcul centrale (4) avec la valeur de vérification de véhicule (Hr),
- l'unité de calcul centrale (4) vérifie la concordance entre la valeur de vérification d'identification (H) et les entrées d'une table d'identification (14) stockée dans l'unité de calcul (4), et
- l'unité de calcul centrale (4) n'envoie le signal de validation (16) prédéterminé à l'unité de service (12) que si l'une des entrées de la table d'identification (14) concorde avec la valeur de vérification d'identification (H).

3. Procédé selon l'une des revendications précédentes, **caractérisé en ce que**
- l'unité d'authentification (2) génère une deuxième valeur initiale (Np),
- une valeur secrète (S) est stockée dans l'unité d'authentification (2),
- une autre valeur secrète (S0) est stockée dans l'unité de calcul centrale (4),
- l'unité d'authentification (2) génère, au moyen d'une autre fonction de vérification (h) prédéterminée, une valeur de vérification de session (V) à partir de la valeur secrète (S), de la valeur initiale (Nr) et de l'autre valeur initiale (Np),
- la valeur de vérification de session (V) est transmise à l'unité de calcul centrale (4) avec la valeur de vérification de véhicule (Hr) associée à la valeur caractéristique (7),
- l'unité de calcul centrale (4) génère, au moyen de la fonction de vérification (h), une autre valeur de vérification de session (V') à partir de l'autre valeur secrète (S1), de la valeur initiale (Nr) et de l'autre valeur initiale (Np),
- l'unité de calcul centrale (4) vérifie la concordance entre l'autre valeur de vérification de session (V') et la valeur de vérification de session (V), et
- l'unité de calcul centrale (4) n'envoie le signal de validation (16) prédéterminé à l'unité de service (12) que si la valeur de vérification de session (V) concorde avec la deuxième valeur de vérification de session (V').

4. Procédé selon la revendication 3, **caractérisé en ce que**
- l'unité de calcul centrale (4) envoie l'autre valeur secrète (S0) en tant que signal de validation prédéterminé (16) à l'unité de service (12),
l'unité de service (12)
- calcule, au moyen de la fonction de vérification (h), une première valeur de vérification de validation (M) à partir de l'autre valeur secrète (S0) et de la valeur initiale (Nr),
- calcule, au moyen de la fonction de vérification (h), une deuxième valeur de vérification de validation (N) à partir de la première valeur de vérification de validation (M),
- transmet la première valeur de vérification de validation (M) à l'unité de calcul centrale (4),
- transmet la deuxième valeur de vérification de validation (N) à l'unité d'authentification (2),
l'unité de calcul centrale (4)
- calcule, au moyen de la fonction de vérification (h), une valeur de mise à jour (U) à partir de l'autre valeur secrète (S0) et de la première valeur de vérification de validation (M),
- met à jour, au moyen d'une fonction de mise à jour prédéterminée, l'autre valeur secrète (S0) en la valeur de mise à jour (U),
l'unité d'authentification (2)
- calcule, au moyen de la fonction de vérification (h), une autre première valeur de vérification de validation (M') à partir de la valeur secrète (S) et de la première valeur initiale (Nr),
- calcule, au moyen de la fonction de vérification (h), une autre deuxième valeur de vérification de validation (N') à partir de l'autre première valeur de vérification de validation (M'),
- en cas de concordance entre l'autre deuxième valeur de vérification de validation (N') et la deuxième valeur de vérification de validation (N),
- calcule, au moyen de la fonction de vérification (h), la valeur de mise à jour (U) à partir de la valeur secrète (S) et de l'autre première valeur de vérification de validation (M'), et
- met à jour, au moyen de la fonction de mise à jour prédéterminée, la valeur secrète (S) en l'autre valeur de mise à jour (U1).

5. Procédé selon l'une des revendications précédentes, **caractérisé en ce que** l'instruction de demande (6) à lire à partir de la table de demandes (8) et la valeur caractéristique (7) à lire à partir de la table de valeurs caractéristiques (11) sont sélectionnées au moyen d'une fonction de sélection prédéterminée en fonction de la valeur de vérification de session (V).

6. Procédé selon la revendication 5, **caractérisé en ce que** la fonction de sélection est l'algorithme de Luhn.

7. Procédé selon l'une des revendications précédentes, **caractérisé en ce qu'**après une réception du signal de validation (16) par l'unité de service (12), un processus de communication est lancé entre l'unité de service (12) et l'unité d'authentification (2) et/ou un appareil de commande du véhicule (1).

8. Procédé selon l'une des revendications précédentes, **caractérisé en ce que**
- l'unité de service (12) transmet un identifiant de service (F) à l'unité de calcul centrale (4),
- l'unité de calcul centrale (4) vérifie si l'identifiant de service (F) est débloqué pour la valeur d'identification (ID) dans l'unité de calcul centrale (4),
- l'unité de calcul centrale (4) n'envoie le signal de validation (16) prédéterminé à l'unité de service (12) que si l'identifiant de service (F) est activé pour la valeur d'identification (ID).

9. Procédé selon l'une des revendications précédentes, **caractérisé en ce que** les transmissions entre l'unité d'authentification (2) et l'unité de calcul centrale (4) sont effectuées par l'intermédiaire de l'unité de service (3).

10. Procédé selon la revendication 8 ou 9, **caractérisé en ce que**
- l'unité de calcul centrale (4) transmet un signal de demande de retour (B) prédéterminé à une unité d'entrée (3) lorsque l'identifiant de service (F) est désactivé pour la valeur d'identification (ID),
- l'unité d'entrée (3) délivre un signal d'avertissement prédéterminé lors de la réception du signal de demande de retour (B),
- l'unité d'entrée (3) envoie un signal d'activation (A) à l'unité de calcul centrale (4) lors d'une entrée d'utilisateur prédéterminée, et/ou
l'unité de calcul centrale (4) active l'identifiant de service (F) pour la valeur d'identification (ID).

11. Système comprenant une unité d'authentification (2), une unité de service (12) et une unité de calcul (4), conçu pour mettre en œuvre un procédé selon l'une des revendications précédentes.
